(19) Europäisches Patentamt
European Patent Office
Office européen des brevets

(11) **EP 4 765 685 A1**

(12) **DEMANDE DE BREVET EUROPEEN**

(43) Date de publication:
**24.06.2026 Bulletin 2026/26**

(51) Classification Internationale des Brevets (IPC):
***H04B 11/00*** *(2006.01)*

(21) Numéro de dépôt: 25225205.1

(52) Classification Coopérative des Brevets (CPC):
**H04B 11/00**

(22) Date de dépôt: **18.12.2025**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.12.2024 FR 2415005**

(71) Demandeur: **Commissariat à l'Energie Atomique et aux Energies Alternatives**
**75015 Paris (FR)**

(72) Inventeurs:
• **GARRAUD, Nicolas**
**38054 GRENOBLE CEDEX 09 (FR)**
• **CABANILLAS, Esteban**
**38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ ET SYSTÈME DE DÉTERMINATION D'UNE FRÉQUENCE DE FONCTIONNEMENT D'UN SYSTÈME DE TRANSMISSION ACOUSTIQUE**

(57) Procédé de détermination d'une fréquence de fonctionnement d'un système de transmission acoustique (STA) comprenant un élément primaire (EP) et un élément secondaire (ES) agencés de part et d'autre d'une paroi, l'élément primaire comprenant un premier transducteur électro-acoustique (T1) pour générer et détecter des ondes acoustiques (OA), l'élément secondaire (ES) comprenant un second transducteur électro-acoustique (T2) et étant configuré pour modifier de manière contrôlée une impédance électrique aux bornes dudit second transducteur entre une condition de circuit ouvert et une condition de court-circuit ; caractérisé en ce que ladite fréquence de fonctionnement est déterminée à partir de l'évolution en fonction de la fréquence de la différence de phase entre une impédance d'entrée, du côté de l'élément primaire (EP), d'un quadripôle électrique modélisant l'ensemble formé par le premier (T1) et le second (T2) transducteur couplés acoustiquement, avec le second transducteur (T2) en court-circuit et en circuit ouvert.

Système pour la mise en œuvre d'un tel procédé.

[Fig. 2]

Fig. 2

EP 4 765 685 A1

**Description**

L'invention concerne le domaine des systèmes de transmission acoustique de puissance et de données (TAPD, ou APDT).

De tels systèmes permettent de réaliser une communication - en général courte distance, c'est-à-dire sur des distances de l'ordre des centimètres ou tout au plus des mètres - entre des équipements situés de part et d'autre d'une paroi, particulièrement en métal. Les équipements communicants peuvent être, par exemple, d'une part un ou plusieurs capteurs et d'autre part une station de contrôle desdits capteurs.

L'utilisation de techniques de communication radiofréquence ou hyperfréquence - par exemple RFID, Bluetooth, WiFi - n'est pas possible car la paroi métallique absorbe les ondes électromagnétiques. Pour les mêmes raisons, **il** n'est pas possible d'avoir recours à l'induction électromagnétique pour alimenter les capteurs. D'autre part, l'utilisation de techniques filaires nécessiterait de percer des ouvertures dans la paroi, ce qui pourrait poser des problèmes de coût, d'intégrité structurelle et d'étanchéité.

Dans ces conditions, **il** est connu d'utiliser des ondes acoustiques pour transmettre de la puissance et/ou des données à travers la paroi.

Par exemple, un élément primaire (station de contrôle) situé d'un côté accessible d'une paroi, tel l'extérieur d'un tuyau, peut émettre des ondes acoustiques vers un élément secondaire (capteur) situé d'un côté inaccessible de ladite paroi, tel l'intérieur du tuyau. Du côté du capteur, un transducteur électro-acoustique, typiquement piézoélectrique, convertit l'énergie des ondes acoustiques en un courant électrique qui peut être utilisé pour alimenter directement des circuits électroniques et/ou pour charger une batterie ou un super-condensateur. Par ailleurs, les ondes acoustiques émises par l'élément primaire peuvent être modulées pour transmettre des données à l'élément secondaire, par exemple des données de configuration ou d'interrogation du capteur. Le capteur peut aussi transmettre des données, par exemple de mesure, à la station de contrôle soit en émettant à son tour des ondes acoustiques, soit en modulant la phase des ondes acoustiques provenant de la station de contrôle et réfléchies vers elle. Dans ce dernier cas, cette modulation de phase peut être obtenue simplement en modifiant l'impédance aux bornes du transducteur électro-acoustique ; on parle alors de communication par commutation ou modulation d'impédance. Voir par exemple (Takahashi 2019).

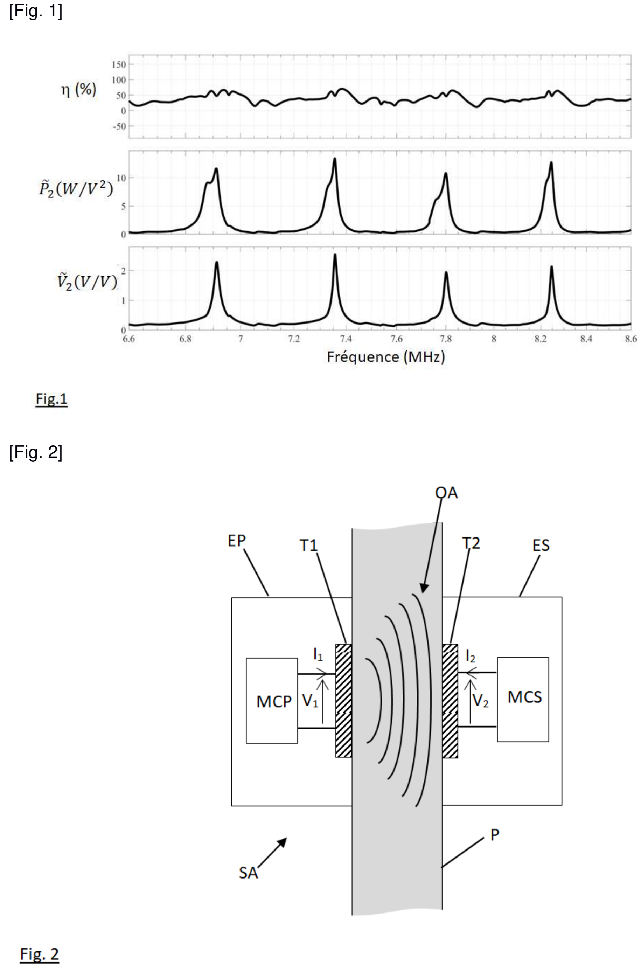

La transmission de puissance varie fortement avec la fréquence des ondes acoustiques en raison des effets de résonance dans la paroi. Cela est illustré sur la [Fig. 1], qui montre la variation du rendement de transmission énergétique $\eta$ (en pourcentage), la puissance maximale normalisée transmise ($\tilde{P}_2$) et la tension maximale normalisée $\tilde{V}_2$ générée par le transducteur en réception en fonction de la fréquence. La puissance est normalisée par rapport au carré de la tension d'entrée, et la tension de sortie est normalisée par rapport à la tension d'entrée $V_1$. Pour chaque fréquence, on a considéré une impédance de valeur optimale aux bornes du transducteur.

Or, ces fréquences de résonance varient en fonction de la température, de changements de géométrie, etc. La fréquence de fonctionnement du système ne peut donc pas être déterminée une fois pour toutes, mais doit pouvoir l'être de manière régulière, et aussi simplement que possible.

Le document EP 4 080 791 divulgue un procédé de détermination de la fréquence qui maximise le transfert de puissance de l'élément primaire vers l'élément secondaire. Conformément à ce procédé, trois balayages de fréquence des ondes acoustiques sont effectués pour trois diverses valeurs d'une impédance aux bornes du transducteur électro-acoustique de l'élément secondaire. Cela permet d'évaluer la matrice d'impédance du quadripôle formé par la paroi et les deux transducteurs, et d'en déduire la fréquence recherchée.

Le document EP 3 671 872 propose de choisir la fréquence pour laquelle la phase de l'admittance d'entrée est minimale, avec le transducteur de l'élément secondaire en circuit ouvert. Cela ne garantit pas que l'on se place au maximum de rendement ou de puissance transmise, ni ne permet de déterminer la charge électrique à connecter.

Le document EP 2 832 016 propose de choisir la fréquence permettant de maximiser la tension aux bornes d'une capacité de stockage de l'élément secondaire. Cela nécessite d'avoir préalablement établi la communication pour que l'élément secondaire puisse transmettre une information de niveau de charge de la capacité à l'élément primaire.

Le document US2010/0027379 décrit un fonctionnement dans lequel la fréquence de fonctionnement est déterminée en maximisant l'amplitude du signal reçu, ce qui nécessite aussi l'établissement préalable d'une communication entre l'élément secondaire et l'élément primaire.

Le document US 10,559,981 divulgue un fonctionnement dans lequel la fréquence de fonctionnement est déterminée en identifiant un minimum local de la phase de l'impédance. Plus particulièrement, la fréquence de fonctionnement correspond au minimum local le plus proche d'une « fréquence optimale globale » prédéfinie.

Les méthodes connues de l'art antérieur ne donnent pas entière satisfaction. En effet, les présents inventeurs se sont rendu compte qu'ils ne permettent pas dans tous les cas d'assurer un fonctionnement optimal du système de transmission, c'est-à-dire un fonctionnement garantissant à la fois :

- un niveau de puissance suffisamment élevé de l'élément primaire vers le secondaire ;
- un rendement - défini comme le rapport entre la puissance reçue par l'élément secondaire et la puissance consommée par l'élément primaire - élevé ;
- une tension aux bornes du transducteur de l'élément secondaire suffisamment élevée, en particulier par rapport aux tensions de seuils de diodes connectées audit transducteur ; et
- un débit de communication élevé.

Par ailleurs, certaines des méthodes de l'art antérieur sont complexes à mettre en œuvre (par exemple, la méthode de EP 4 080 791 utilise trois rampes de fréquence et trois valeurs d'impédance aux bornes du secondaire) et/ou nécessitent l'établissement préalable d'une communication entre l'élément secondaire et l'élément primaire (c'est notamment le cas pour US2010/0027379). Cela peut être problématique lorsque le dispositif de stockage d'énergie (batterie ou super-condensateur) de l'élément secondaire est totalement déchargé ; il faut alors procéder à une étape préalable de chargement de ce dispositif de stockage, mais « à l'aveugle », sans connaître la fréquence optimale de fonctionnement.

L'invention vise à surmonter, en tout ou en partie, ces limitations de l'art antérieur.

Conformément à l'invention, cet objectif est atteint en déterminant la fréquence de fonctionnement en fonction de la différence $\Delta\varphi$ entre la phase de l'impédance d'entrée d'un quadripôle électrique modélisant l'ensemble formé par les transducteurs de l'élément primaire et de l'élément secondaire couplés acoustiquement lorsque le transducteur de l'élément secondaire est en court-circuit, et la phase de ladite impédance d'entrée lorsque le transducteur de l'élément secondaire est en circuit ouvert.

Plus particulièrement, la fréquence de fonctionnement peut être la fréquence qui maximise $\Delta\varphi$. Cette fréquence est optimale pour une communication par modulation d'impédance, et permet d'obtenir le débit le plus élevé. En outre, les présents inventeurs se sont rendu compte qu'elle est presque optimale en termes de puissance transmise et du rendement.

En variante, il est possible de choisir une fréquence plus élevée, mais inférieure à la valeur pour laquelle $\Delta\varphi=0$. Un tel choix permet d'améliorer la puissance transmise et la tension de sortie, mais au prix d'un débit dégradé. Le compromis optimal dépendra de l'application particulière considérée, mais d'une manière générale on privilégiera le débit de communication, en choisissant une fréquence de fonctionnement qui assure une différence de phase $\Delta\varphi$ au moins égale à la moitié de sa valeur maximale.

Un objet de l'invention est donc un procédé de détermination d'une fréquence de fonctionnement d'un système de transmission acoustique comprenant un élément primaire et un élément secondaire, l'élément primaire comprenant un premier transducteur électro-acoustique configuré pour générer des ondes acoustiques de fréquence variable en direction de l'élément secondaire à travers une paroi et pour détecter des réflexions desdites ondes acoustique par l'élément secondaire, l'élément secondaire comprenant un second transducteur électro-acoustique adapté pour convertir lesdites ondes acoustiques en un courant électrique d'alimentation, ledit élément secondaire étant en outre configuré pour modifier de manière contrôlée une impédance électrique aux bornes dudit second transducteur entre une condition de circuit ouvert et une condition de court-circuit ; caractérisé en ce qu'il comprend les étapes suivantes :

a) émission desdites ondes acoustiques de l'élément primaire vers l'élément secondaire, tout en maintenant le second transducteur en en court-circuit ;
b) simultanément à l'étape a), mesure d'une première phase de l'impédance d'entrée, du côté de l'élément primaire, d'un quadripôle électrique modélisant l'ensemble formé par le premier et le second transducteur couplés acoustiquement, avec le second transducteur en court-circuit ;
c) émission desdites ondes acoustiques de l'élément primaire vers l'élément secondaire, tout en maintenant le second transducteur en en circuit ouvert ;
d) simultanément à l'étape c), mesure d'une seconde phase de l'impédance d'entrée, du côté de l'élément primaire, d'un quadripôle électrique modélisant l'ensemble formé par le premier et le second transducteur couplés acoustiquement, avec le second transducteur en circuit ouvert ;
e) calcul de la différence $\Delta\varphi$ entre la première et la seconde phase ; lesdites étapes a) à e) étant répétées pour une pluralité de fréquences balayant une plage de fonctionnement du système de transmission acoustique ; et ensuite
f) détermination de ladite fréquence de fonctionnement en fonction de ladite différence entre la première et la seconde phase calculée pour ladite pluralité de fréquences.

Selon des modes de réalisation particuliers de ce procédé :
La fréquence de fonctionnement déterminée lors de l'étape f) peut être comprise entre une première valeur $f_1$ maximisant ladite différence entre la première et la seconde phase et une deuxième valeur $f_2$ l'annulant, cette dernière valeur étant exclue.

Plus particulièrement, la fréquence de fonctionnement déterminée lors de l'étape f) peut être comprise entre ladite première valeur maximisant ladite différence entre la première et la seconde phase et une troisième valeur $f_3$, comprise entre lesdites première et deuxième valeurs et telle que ladite différence entre la première et la seconde phase prend une valeur non inférieure à la moitié de sa valeur maximale.

Le procédé peut comprendre, dans l'élément secondaire, l'actuation d'un dispositif de commutation pour passer d'une condition dans laquelle le second transducteur est en court-circuit à une condition dans laquelle le second transducteur est en circuit ouvert et inversement.

En variante, l'élément secondaire peut comprendre une paire de diodes montées tête-bêche en parallèle audit second transducteur, le procédé comprenant l'émission, par ledit élément primaire, à des instants successifs, desdites ondes acoustiques à un premier niveau d'intensité suffisamment faible pour qu'une tension générée par ledit second transducteur excité par lesdites ondes acoustique soit inférieure à une tension de seul desdites diodes, et à un second niveau d'intensité suffisamment élevé pour qu'une tension générée par ledit second transducteur excité par lesdites ondes acoustique soit supérieure à une tension de seul desdites diodes.

Les étapes a) à e) peuvent être mises en œuvre successivement pour chaque fréquence de ladite pluralité de fréquences.

En variante, les étapes a) et b) peuvent être d'abord mises en œuvre pour ladite pluralité de fréquences, puis les étapes c) et d) être à leur tour mises en œuvre pour les mêmes fréquences, ou inversement.

Un autre objet de l'invention est un système de transmission acoustique comprenant un élément primaire et un élément secondaire, l'élément primaire comprenant un premier transducteur électro-acoustique configuré pour générer des ondes acoustiques de fréquence variable en direction de l'élément secondaire à travers une paroi et pour détecter des réflexions desdites ondes acoustique par l'élément secondaire, l'élément secondaire comprenant un second transducteur électro-acoustique adapté pour convertir lesdites ondes acoustiques en un courant électrique d'alimentation, ledit élément secondaire étant en outre configuré pour modifier de manière contrôlée une impédance électrique aux bornes dudit second transducteur entre une condition de circuit ouvert et une condition de court-circuit ; caractérisé en ce que le système de transmission comprend un premier moyen de contrôle configuré pour piloter l'élément primaire de manière à, pour une pluralité de fréquences balayant une plage de fonctionnement du système de transmission acoustique :

a) émettre lesdites ondes acoustiques de l'élément primaire vers l'élément secondaire, tout en maintenant le second transducteur en en court-circuit ;

b) simultanément à l'étape a), mesurer une première phase de l'impédance d'entrée, du côté de l'élément primaire, d'un quadripôle électrique modélisant l'ensemble formé par le premier et le second transducteur couplés acoustiquement, avec le second transducteur en court-circuit ;

c) émettre lesdites ondes acoustiques de l'élément primaire vers l'élément secondaire, tout en maintenant le second transducteur en circuit ouvert ;

d) simultanément à l'étape c), mesurer une seconde phase de l'impédance d'entrée, du côté de l'élément primaire, d'un quadripôle électrique modélisant l'ensemble formé par le premier et le second transducteur couplés acoustiquement, avec le second transducteur en circuit ouvert ;

le moyen de contrôle étant également configuré pour

e) calculer la différence $\Delta\varphi$ entre la première et la seconde phase pour chaque fréquence de ladite pluralité de fréquences ;

et pour

f) déterminer ladite fréquence de fonctionnement en fonction de ladite différence entre la première et la seconde phase calculée pour ladite pluralité de fréquences.

Selon des modes de réalisation particuliers de ce système :

Ledit moyen de contrôle peut être configuré pour déterminer une dite fréquence de fonctionnement comprise entre une première valeur $f_1$ maximisant ladite différence entre la première et la seconde phase et une deuxième valeur $f_2$ l'annulant, cette dernière valeur étant exclue.

Plus particulièrement, ledit moyen de contrôle peut être configuré pour déterminer une dite fréquence de fonctionnement comprise entre ladite première valeur maximisant ladite différence entre la première et la seconde phase et une troisième valeur $f_3$, comprise entre lesdites première et deuxième valeurs et telle que ladite différence entre la première et la seconde phase prend une valeur non inférieure à la moitié de sa valeur maximale.

Le système peut comprendre, dans l'élément secondaire, un second moyen de contrôle ainsi qu'un dispositif de commutation, ledit second moyen de contrôle étant configuré pour piloter l'actuation dudit dispositif de commutation pour le faire passer d'une condition dans laquelle le second transducteur est en court-circuit à une condition dans laquelle le second transducteur est en circuit ouvert et inversement.

En variante, l'élément secondaire peut comprendre une paire de diodes montées tête-bêche en parallèle audit second transducteur, ledit premier moyen de contrôle étant également configuré pour piloter le premier transducteur de manière à ce qu'il émette, à des instants successifs, desdites ondes acoustiques à un premier niveau d'intensité suffisamment faible pour qu'une tension générée par ledit second transducteur excité par lesdites ondes acoustique soit inférieure à une tension de seul desdites diodes, et à un second niveau d'intensité suffisamment élevé pour qu'une tension générée par ledit second transducteur excité par lesdites ondes acoustique soit supérieure à une tension de seul desdites diodes.

Ledit premier moyen de contrôle, ou lesdits premier et second moyens de contrôle, peuvent être configurés pour mettre en œuvre les étapes a) à e) successivement pour chaque fréquence de ladite pluralité de fréquences.

En variante, ledit premier moyen de contrôle, ou lesdits premier et second moyens de contrôle, peuvent être configurés pour mettre en œuvre d'abord les étapes a) et b) pour ladite pluralité de fréquences, puis les étapes c) et d) pour les mêmes fréquences, ou inversement.

D'autres caractéristiques, détails et avantages de l'invention ressortiront à la lecture de la description faite en référence aux dessins annexés donnés à titre d'exemple et qui représentent, respectivement :

[Fig.1], déjà évoquée plus haut, un graphique de la variation du rendement de transmission énergétique, de la puissance maximale transmise et de la tension maximale générée par un transducteur en réception en fonction de la fréquence d'une onde acoustique transmise à travers une paroi ;

[Fig. 2], le schéma de principe d'un système de transmission acoustique de puissance et de données pouvant convenir à la mise en œuvre de l'invention ;

[Fig. 3], des graphiques illustrant le principe à la base de l'invention ;

[Fig. 4], un organigramme d'un procédé de détermination d'une fréquence de fonctionnement selon un mode de réalisation de l'invention ;

[Fig. 5], un organigramme d'un procédé de détermination d'une fréquence de fonctionnement selon un autre mode de réalisation de l'invention ;

[Fig. 6], le schéma de principe d'un élément primaire d'un système de transmission acoustique de puissance et de données selon un mode de réalisation de l'invention ;

[Fig. 7], le schéma de principe d'un élément secondaire d'un système de transmission acoustique de puissance et de données selon un mode de réalisation de l'invention ; et

[Fig. 8], le schéma de principe d'un élément primaire d'un système de transmission acoustique de puissance et de données selon un autre mode de réalisation de l'invention.

Le système de transmission acoustique de puissance et de données SA de la [Fig. 2] comprend un élément primaire EP et un élément secondaire ES agencés de part et d'autre d'une paroi P, par exemple métallique. L'élément primaire EP comprend un premier transducteur électro-acoustique (typiquement piézoélectrique) T1 et un premier moyen de contrôle - constitué d'un ou plusieurs circuits électroniques - MCP relié électriquement au premier transducteur électro-acoustique T1. De même, l'élément secondaire ES comprend un second transducteur électro-acoustique (typiquement piézoélectrique) T2 et un second moyen de contrôle - constitué d'un ou plusieurs circuits électroniques - MCS relié électriquement au second transducteur électro-acoustique T2. Le premier transducteur électro-acoustique T1 est utilisé à la fois en émission et en réception : il est alimenté en courant électrique alternatif par le premier moyen de contrôle MCP pour générer des ondes acoustiques OA qui se propagent à travers la paroi P. Les ondes acoustiques OA sont partiellement réfléchies et partiellement absorbées par le second transducteur T2.

La puissance acoustique absorbée par le second transducteur T2 est convertie en puissance électrique qui sert directement à alimenter le second moyen de contrôle MCS et/ou à charger une batterie ou super-condensateur (non représenté) d'alimentation.

La fraction réfléchie des ondes acoustiques OA retraverse la paroi P et influence la tension $V_1$ aux bornes du transducteur T1 et/ou le courant $I_1$ qui le traverse. Cette tension et ce courant sont lus par le premier moyen de contrôle MCP.

Le coefficient (complexe) de réflexion des ondes acoustiques par le second transducteur T2 dépend, entre autre, de l'impédance électrique connectée à ses bornes, dont la valeur peut être variée par le second moyen de contrôle MCS. Aussi, le premier moyen de contrôle MCP, en analysant la phase et l'amplitude de la tension $V_1$ et du courant $I_1$, peut détecter un changement de ladite impédance. Cet effet est exploité pour transmettre de l'information de l'élément secondaire ES vers l'élément primaire EP. Typiquement, cette transmission se fait de manière binaire, l'impédance aux bornes du second transducteur T2 commutant entre une valeur élevée, en principe infinie - auquel cas le transducteur peut être considéré en circuit ouvert - et une valeur faible, en principe nulle, auquel cas le transducteur peut être considéré en court-circuit. En variante, il est possible de commuter entre une impédance « haute », mais pas infinie, et une impédance « basse », mais ne constituant pas un court-circuit. Cela permet de à l'élément secondaire de communiquer tout en récupérant de l'énergie des ondes acoustiques. Il est également possible d'utiliser plus de deux valeurs d'impédance.

L'ensemble constitué par les deux transducteurs T1, T2 couplés acoustiquement à travers la paroi P peut être modélisé par un quadripôle électrique. Soit $V_1$ la tension aux bornes du transducteur $T_1$ et $I_1$ le courant entrant dans ledit transducteur ; de même soit $V_2$ la tension aux bornes du transducteur $T_2$ et $I_2$ le courant entrant dans ledit transducteur. Alors on peut écrire :

$$\begin{pmatrix} V_1 \\ V_2 \end{pmatrix} = \begin{pmatrix} Z_{11} & Z_{12} \\ Z_{21} & Z_{22} \end{pmatrix} \begin{pmatrix} I_1 \\ I_2 \end{pmatrix}$$

Où $Z_{11}$, $Z_{12}=Z_{21}$ et $Z_{22}$ sont des valeurs complexes ayant les dimensions d'une impédance.

Lorsque le transducteur T2 est en circuit ouvert, $I_2=0$ ; par conséquent $V_1 = V_1^{co} = Z_{11}I_1^{co}$ et $V_2 = V_2^{co} = Z_{12}I_1^{co}$ (où l'exposant « co » signifie « circuit ouvert »). On en déduit :

$$Z_{11} = \frac{V_1^{co}}{I_1^{co}},$$

$$Z_{12} = \frac{V_2^{co}}{I_1^{co}}$$

Lorsque le transducteur T2 est en court-circuit, $V_2 = V_2^{cc} = 0$ ; par conséquent $V_1 = V_1^{cc} = Z_{11}I_1^{cc}(1 - c^2)$, et par conséquent

$$Z_{11} = \frac{V_1^{cc}}{I_1^{cc}(1-c^2)}$$

où l'exposant « cc » signifie « court-circuit » et le paramètre de couplage c est donné par

$$c = \frac{Z_{12}}{\sqrt{Z_{11}Z_{12}}}.$$

On définit l'impédance d'entrée $Z_{in} = \frac{V_1}{I_1}$, qui peut être déterminée exclusivement à partir de mesures effectuées par le premier moyen de contrôle MCP. On a, lorsque T2 est en circuit ouvert, $Z_{in}^{co} = Z_{11}$, et lorsque T2 est en court-circuit $Z_{in}^{cc} = Z_{11}(1 - c^2)$. La variation de l'impédance d'entrée du quadripôle lorsque T2 passe de son étant en circuit ouvert à celui en court-circuit est donc $\Delta|Z_{in}| = |Z_{in}^{cc}| - |Z_{in}^{co}| = \left|\frac{Z_{12}^2}{Z_{22}}\right|$ en module et $\Delta\varphi = \arg(Z_{in}^{cc}) - \arg(Z_{in}^{co})$ en phase.

En pratique, pour extraire l'information encodées dans les commutations d' impédance aux bornes du transducteur T2, le premier moyen de contrôle détecte de préférence la phase de la variation d'impédance d'entrée $\Delta\varphi$, dont la mesure est moins sensible au bruit que celle du module $\Delta|Z_{in}|$, est élevée, plus l'écart signal à bruit du canal de communication de ES à EP sera élevé, et plus élevé pourra être le débit de transmission.

Ces différentes impédances, et donc aussi $\Delta\varphi$, sont en général fonction de la fréquence f d'excitation du transducteur T1 (et donc des ondes acoustiques OA).

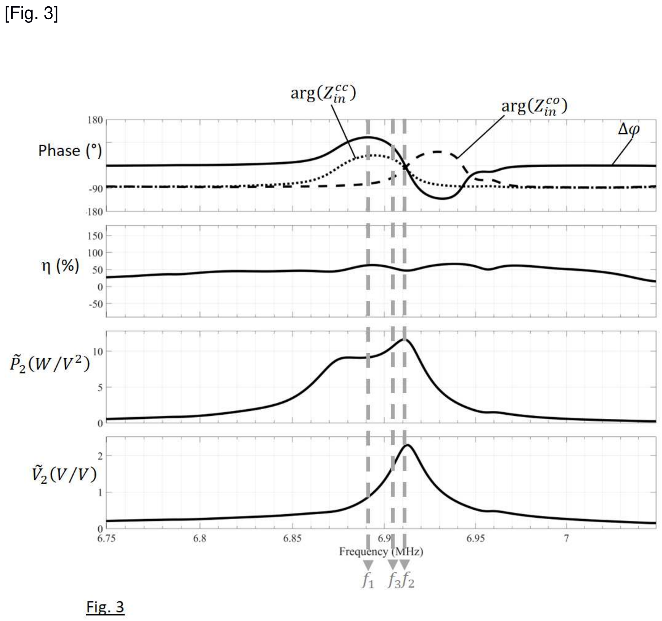

La [Fig. 3] montre comment $arg(Z_{in}^{cc}), arg(Z_{in}^{co}), a, \Delta\varphi =$ (panneau supérieur), le rendement de transmission de puissance $\eta$ (2e panneau à partir du haut), la puissance maximale normalisée transmise $\tilde{P}_2$ (3e panneau à partir du haut) et la tension maximale normalisée $\tilde{V}_2$ générée par le transducteur en réception (panneau du bas), évoluent en fonction de la fréquence f dans un système de transmission acoustique de puissance et de données SA. Les courbes de la [Fig. 3] varient dans une certaine mesure en fonction des détails de mise en œuvre du système SA, mais leur allure reste remarquablement constante. Les conclusions que l'on peut en tirer présentent donc une portée générale.

On remarque que la fréquence $f_1$ qui maximise $\Delta\varphi$ permet d'obtenir un rendement $\eta$ et une puissance transmise $\tilde{P}_2$ proches de leur maxima respectifs. Il s'agit donc d'un point de fonctionnement intéressant pour le système SA. Lorsqu'on augmente la fréquence de fonctionnement au-delà de $f_1$, $\Delta\varphi$ diminue - d'abord lentement, puis plus rapidement, tandis que $\tilde{P}_2$ augmente légèrement et $\tilde{V}_2$ augmente de manière plus importante. Pour $f=f_2$, $\tilde{P}_2$ et $\tilde{V}_2$ sont maximisés mais la communication est impossible car $\Delta\varphi = 0$. Avantageusement, donc, on choisira une fréquence de fonctionnement égale à $f_1$ (pour maximiser le débit de transmission) ou comprise entre $f_1$ et $f_2$ (cette dernière valeur étant exclue) et préférentiellement entre $f_1$ et $f_3$, telle que $\Delta\varphi(f_3) = \frac{1}{2}\Delta\varphi(f_1)$ (pour trouver un compromis entre la maximisation de $\Delta\varphi$ et celle de $\tilde{P}_2$ et $\tilde{V}_2$).

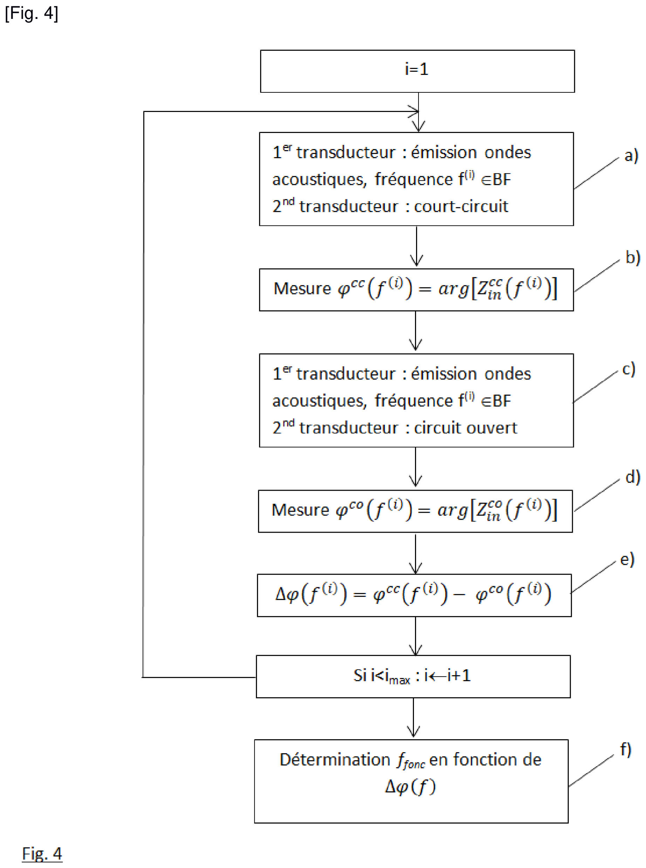

La [Fig. 4] montre un organigramme d'un procédé pour déterminer une fréquence de fonctionnement du système SA selon un mode de réalisation de l'invention.

Premièrement, une pluralité de fréquences discrètes $f^{(i)}$ balayant une bande de fonctionnement F est choisie. L'indice i est d'abord initialisé : i=1.

Ensuite - étape a) - le premier moyen de contrôle MCP pilote le premier transducteur T1 pour émettre des ondes acoustiques à la fréquence $f^{(1)}$ pendant que le second transducteur T2 est maintenu en court-circuit.

Pendant ce temps - étape b), qui est en fait simultanée à l'étape a) - le premier moyen de contrôle MCP mesure

$$\varphi^{cc}\left(f^{(1)}\right) = arg\left[Z_{11}^{cc}\left(f^{(1)}\right)\right]$$, ou plus exactement calcule $\varphi^{cc}(f^{(1)})$ à partir de mesures de $V_1$ et $I_1$.

Puis - étape c) - le premier moyen de contrôle MCP pilote le premier transducteur T1 pour émettre des ondes acoustiques à la fréquence $f^{(1)}$ pendant que le second transducteur T2 est maintenu en circuit ouvert.

Pendant ce temps - étape d), qui est en fait simultanée à l'étape c) - le premier moyen de contrôle MCP mesure

$$\varphi^{co}\left(f^{(1)}\right) = arg\left[Z_{11}^{cc}\left(f^{(1)}\right)\right]$$, ou plus exactement calcule $\varphi^{co}(f^{(1)})$ à partir de mesures de $V_1$ et $I_1$.

Ensuite - étape e) - le premier moyen de contrôle MCP calcule $\Delta\varphi(f^{(1)}) = \varphi^{cc}(f^{(1)}) - \varphi^{co}(f^{(1)})$.

A ce point, l'indice i est incrémenté et les étapes a) - e) sont itérées jusqu'à ce que ledit indice atteigne sa valeur maximale $i_{max}$.

Lors de la dernière étape, la fréquence de fonctionnement $f_{fonc}$ est déterminée à partir de $\Delta\varphi(f^{(i)})$ pour toutes les valeurs de i comprises entre 1 et $i_{max}$. Comme expliqué plus haut on pourra choisir $f_{fonc} \in [f_1, f_2)$, préférentiellement $f_{fonc} \in [f_1, f_3]$, ou bien $f_{fonc} = f_1$.

On comprend qu'il est possible d'inverser l'ordre des étapes a/b) et c/d). En outre, il est possible de stocker les valeurs de $\varphi^{cc}(f^{(i)})$ et $\varphi^{co}(f^{(i)})$ pour effectuer l'étape e) de calcul de $\Delta\varphi(f^{(i)})$ après avoir itéré sur toutes les valeurs admissibles de i.

Il est également possible que les étapes b) et d) fournissent les valeurs complexes de $Z_{in}$ et que, lors de l'étape e), la valeur complexe $\Delta Z$ soit calculée, puis son argument soit extrait pour obtenir $\Delta\varphi$.

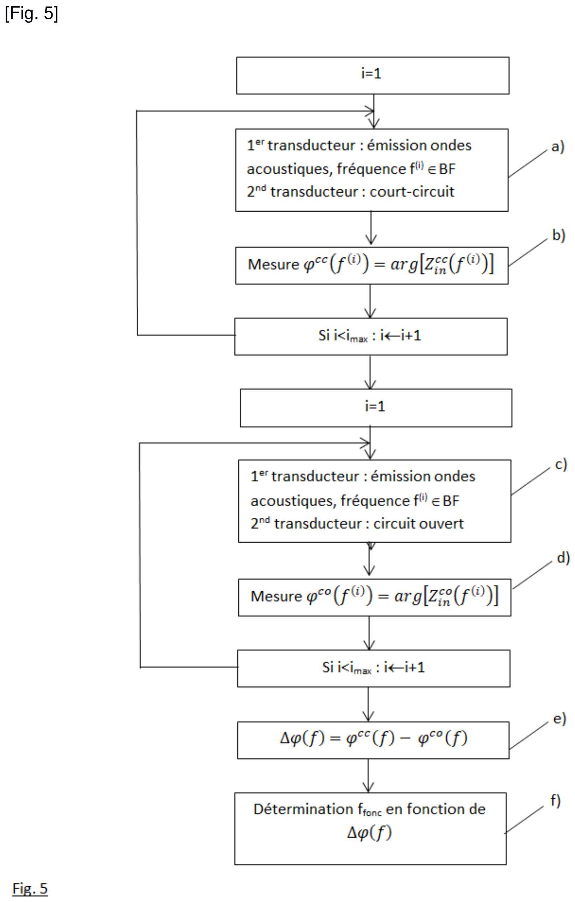

La [Fig. 5] montre un autre organigramme d'un procédé pour déterminer une fréquence de fonctionnement du système SA selon un mode de réalisation alternatif de l'invention. Dans ce mode de réalisation, les étapes a) et b) sont d'abord mises en œuvre de manière itérative pour toutes les valeurs admissibles de i, puis ce sont les étapes c) et d) qui sont itérées. Les étapes e) et f) sont mises en œuvre après les deux séries d'itérations. Comme dans le cas précédent, il est possible d'inverser l'ordre des étapes a/b) et c/d). Pour la mise en œuvre de ce mode de réalisation on peut utiliser des signaux présentant une modulation continue, typiquement linéaire, de fréquence (un « chirp »), pour piloter le transducteur T1.

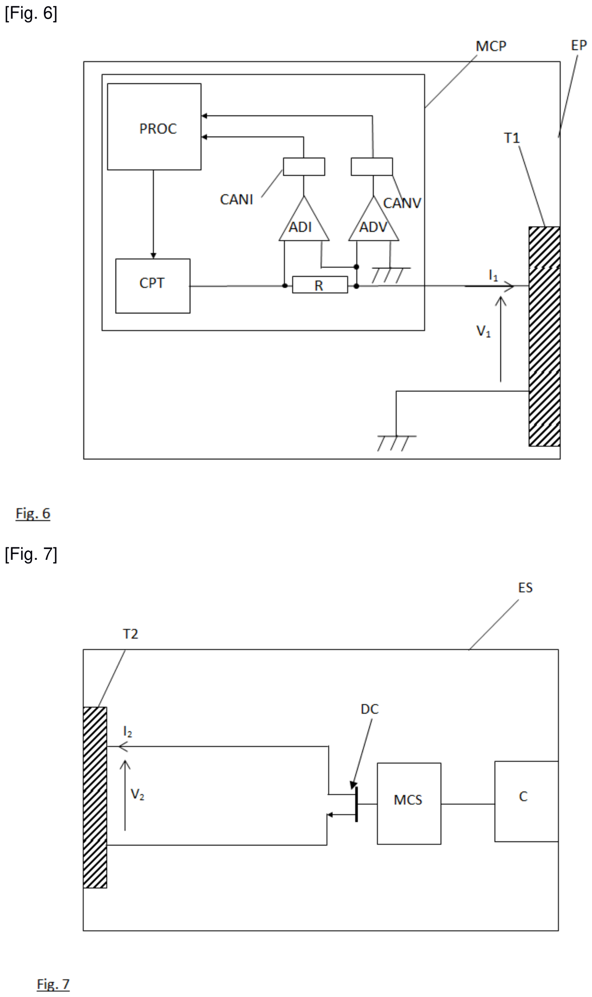

La [Fig. 6] montre un schéma fonctionnel d'un élément primaire EP d'un système SA selon un mode de réalisation de l'invention.

L'élément primaire EP comporte principalement le moyen de contrôle MCP et le transducteur MCP. D'autres composants seront généralement présents : un bloc d'alimentation, une interface d'entrée-sortie, etc. Ces composants sont généralement conventionnels ; dans la suite, on s'intéressera à la structure et au fonctionnement du moyen de contrôle MCP.

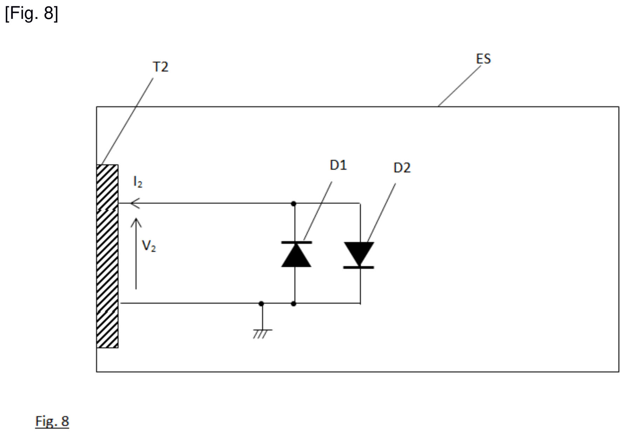

A l'intérieur du premier moyen de contrôle MCP, un processeur numérique PROC contrôle un circuit de pilotage CPT, configuré pour générer un signal d'excitation du premier transducteur T1, auquel il est relié électriquement. Le processeur PROC détermine la fréquence f dudit signal d'excitation et, le cas échéant, son amplitude (l'importance de l'amplitude sera discutée plus loin, en référence à la [Fig. 8]). Un premier amplificateur différentiel ADV permet de lire la tension $V_1$ aux bornes du transducteur T1. Sa sortie est numérisée par un premier convertisseur analogique-numérique CANV. Un second amplificateur différentiel ADI, ayant deux entrées connectées aux bornes d'une résistance de shunt R, agencée en série sur le conducteur reliant le circuit de pilotage CPT au transducteur T1, permet de mesurer le courant $I_1$ en entrée dudit transducteur. Sa sortie est numérisée par un second convertisseur analogique-numérique CANI. Les signaux numériques en sortie des convertisseurs CANV, CANI sont fournies en entrée au processeur PROC.

Le processeur PROC peut être un microprocesseur programmé de manière opportune, ou bien un circuit numérique dédié. En tout état de cause, il est configuré pour, dans une première phase :

- contrôler le circuit de pilotage CPT pour effectuer un balayage de fonctionnement, de telle sorte que le signal d'excitation du transducteur T1 prenne successivement les valeurs $f^{(i)}$ mentionnées plus haut ;
- acquérir des convertisseurs CANV, CANI des signaux numériques de $V_1(f^{(i)})$, $I_1(f^{(i)})$ pour chacune de ces fréquences ;
- déterminer la fréquence de fonctionnement $f_{fonc}$, comme expliqué plus haut.

Et dans une deuxième phase :

- contrôler le circuit de pilotage CPT pour émettre une onde acoustique OA à la fréquence $f_{fonc}$;
- acquérir des convertisseurs CANV, CANI des signaux numériques de $V_1(f_{fonc})$, $I_1(f_{fonc})$ ;

- déterminer les variations de phase de $\dfrac{V_1}{I_1}$ et en déduire une séquence de bits transmis, par commutation d'impédance, par l'élément secondaire.

La [Fig. 7] montre un schéma fonctionnel partiel d'un élément secondaire d'un système SA selon un mode de réalisation de l'invention.

Dans ce mode de réalisation, l'élément secondaire ES comprend un capteur C qui acquiert des données de l'environnement extérieur (par exemple, une température) et les convertit en un signal électrique qui est fourni en entrée au second moyen de commande MCS. Ce dernier pilote un dispositif de commutation DC (dans la figure, un transistor MOS) connecté aux bornes du second transducteur T2. L'information en provenance du capteur C est transmise à l'élément primaire en utilisant la technique de commutation d'impédance : lorsque le transistor DC est passant, le transducteur T2 est en court-circuit, lorsqu'il est bloquant, il est en circuit ouvert. Les commutations du transistor DC sont également utilisées pour mettre en œuvre, périodiquement, un procédé de détermination de la fréquence de fonctionnement tel que décrit plus haut. Dans ce mode de réalisation, l'élément secondaire joue un rôle actif. Il doit donc avoir été préalablement alimenté en énergie par les ondes acoustiques émises par l'élément primaire, et pouvoir recevoir des commandes de ce dernier. Les moyens de récupération et de stockage d'énergie (pont redresseur, batterie ou super-condensateur...) et ceux de réception de signaux (qui peuvent être intégrés au second moyen de contrôle MCS) ne sont pas représentés sur la figure car ils sont conventionnels.

La [Fig. 8] illustre le principe de fonctionnement d'un élément secondaire qui intervient de manière purement passive lors de la mise en œuvre du procédé de détermination de la fréquence de fonctionnement. De ce fait, la fréquence de fonctionnement peut être déterminée même si l'élément secondaire est inactif, ou complètement déchargé. Dans ce mode de réalisation, deux diodes D1, D2 agencés tête-bêche sont connectées aux bornes du transducteur T2. Lorsque les ondes acoustiques OA sont suffisamment intenses, la tension engendrée par T2 dépasse la tension de seuil des diodes, qui se comportent alors comme des courts-circuits. Par contre, lorsque l'intensité des ondes acoustiques diminue, la tension engendrée par T2 est inférieure à la tension de seuil des diodes, qui se comportent alors comme des circuits ouverts. La commutation d'impédance du côté de l'élément secondaire est donc pilotée par l'élément primaire via le contrôle de l'amplitude des ondes acoustiques générées par T1.

Même dans le mode de réalisation de la [Fig. 8] l'élément secondaire comprend, en général, des moyens de récupération et de stockage d'énergie (pont redresseur, batterie ou super-condensateur...) des moyens de réception de signaux et des moyens actifs de commutation d'impédance (transistor DC), mais qui ne sont pas représentés sur la figure car ils ne jouent aucun rôle dans le procédé selon l'invention.

Bibliographie

(Takahashi 2019) : V. L. Takahashi et al. « Ultrasonic Power and Data Transfer through Multiple Curved Layers Applied to Pipe Instrumentation » Sensors 2019, 19, 4074

## Revendications

1. Procédé de détermination d'une fréquence de fonctionnement d'un système de transmission acoustique (STA) comprenant un élément primaire (EP) et un élément secondaire (ES), l'élément primaire comprenant un premier transducteur électro-acoustique (TA1) configuré pour générer des ondes acoustiques (OA) de fréquence variable en direction de l'élément secondaire à travers une paroi (P) et pour détecter des réflexions desdites ondes acoustique par l'élément secondaire, l'élément secondaire (ES) comprenant un second transducteur électro-acoustique (T2) adapté pour convertir lesdites ondes acoustiques en un courant électrique d'alimentation, ledit élément secondaire étant en outre configuré pour modifier de manière contrôlée une impédance électrique aux bornes dudit second transducteur entre une condition de circuit ouvert et une condition de court-circuit ; **caractérisé en ce qu'**il comprend les étapes suivantes :

   a) émission desdites ondes acoustiques (OA) de l'élément primaire (EP) vers l'élément secondaire (ES), tout en maintenant le second transducteur (T2) en en court-circuit ;
   b) simultanément à l'étape a), mesure d'une première phase de l'impédance d'entrée, du côté de l'élément primaire (EP), d'un quadripôle électrique modélisant l'ensemble formé par le premier (T1) et le second (T2) transducteur couplés acoustiquement, avec le second transducteur (T2) en court-circuit ;
   c) émission desdites ondes acoustiques (OA) de l'élément primaire (EP) vers l'élément secondaire (ES), tout en maintenant le second transducteur (T2) en en circuit ouvert ;
   d) simultanément à l'étape c), mesure d'une seconde phase de l'impédance d'entrée, du côté de l'élément primaire (EP), d'un quadripôle électrique modélisant l'ensemble formé par le premier et le second transducteur couplés acoustiquement, avec le second transducteur (T2) en circuit ouvert ;
   e) calcul de la différence ($\Delta\varphi$) entre la première et la seconde phase ;
   lesdites étapes a) à e) étant répétées pour une pluralité de fréquences balayant une plage de fonctionnement du système de transmission acoustique ; et ensuite
   f) détermination de ladite fréquence de fonctionnement en fonction de ladite différence ($\Delta\varphi$) entre la première et la seconde phase calculée pour ladite pluralité de fréquences.

2. Procédé selon la revendication 1 dans lequel la fréquence de fonctionnement déterminée lors de l'étape f) est comprise entre une première valeur ($f_1$) maximisant ladite différence entre la première et la seconde phase et une deuxième valeur ($f_2$) l'annulant, cette dernière valeur étant exclue.

3. Procédé selon la revendication 2 dans lequel la fréquence de fonctionnement déterminée lors de l'étape f) est comprise entre ladite première valeur ($f_1$) maximisant ladite différence entre la première et la seconde phase et une troisième valeur ($f_3$), comprise entre lesdites première ($f_1$) et deuxième ($f_2$) valeurs et telle que ladite différence entre la première et la seconde phase prend une valeur non inférieure à la moitié de sa valeur maximale.

4. Procédé selon l'une des revendications précédentes comprenant, dans l'élément secondaire (ES), l'actuation d'un dispositif de commutation (DC) pour passer d'une condition dans laquelle le second transducteur (T2) est en court-circuit à une condition dans laquelle le second transducteur (T2) est en circuit ouvert et inversement.

5. Procédé selon l'une des revendications 1 à 3 dans lequel l'élément secondaire comprend une paire de diodes (D1, D2) montées tête-bêche en parallèle audit second transducteur, le procédé comprenant l'émission, par ledit élément primaire, à des instants successifs, desdites ondes acoustiques (OA) à un premier niveau d'intensité suffisamment faible pour qu'une tension (V2) générée par ledit second transducteur (T2) excité par lesdites ondes acoustique (OA) soit inférieure à une tension de seul desdites diodes (D1, D2), et à un second niveau d'intensité suffisamment élevé pour qu'une tension (V2) générée par ledit second transducteur (T2) excité par lesdites ondes acoustique soit supérieure à une tension de seul desdites diodes.

6. Procédé selon l'une des revendications précédentes dans lequel les étapes a) à e) sont mises en œuvre successivement pour chaque fréquence de ladite pluralité de fréquences.

7. Procédé selon l'une des revendications 1 à 5 dans lequel les étapes a) et b) sont d'abord mises en œuvre pour ladite pluralité de fréquences, puis les étapes c) et d) sont à leur tour mises en œuvre pour les mêmes fréquences, ou inversement.

8. Système de transmission acoustique comprenant un élément primaire (EP) et un élément secondaire (ES), l'élément primaire (EP) comprenant un premier transducteur électro-acoustique (T1) configuré pour générer des ondes acoustiques (OA) de fréquence variable en direction de l'élément secondaire (ES) à travers une paroi (P) et pour détecter des réflexions desdites ondes acoustique par l'élément secondaire (ES), l'élément secondaire (ES) comprenant un second transducteur électro-acoustique (T2) adapté pour convertir lesdites ondes acoustiques en un courant électrique d'alimentation, ledit élément secondaire étant en outre configuré pour modifier de manière contrôlée une impédance électrique aux bornes dudit second transducteur (T2) entre une condition de circuit ouvert et une condition de court-circuit ; **caractérisé en ce que** le système de transmission comprend un premier moyen de contrôle (MCP) configuré pour piloter l'élément primaire de manière à, pour une pluralité de fréquences balayant une plage de fonctionnement du système de transmission acoustique :

a) émettre lesdites ondes acoustiques de l'élément primaire vers l'élément secondaire, tout en maintenant le second transducteur en en court-circuit ;
b) simultanément à l'étape a), mesurer une première phase de l'impédance d'entrée, du côté de l'élément primaire, d'un quadripôle électrique modélisant l'ensemble formé par le premier et le second transducteur couplés acoustiquement, avec le second transducteur en court-circuit ;
c) émettre lesdites ondes acoustiques de l'élément primaire vers l'élément secondaire, tout en maintenant le second transducteur en circuit ouvert ;
d) simultanément à l'étape c), mesurer une seconde phase de l'impédance d'entrée, du côté de l'élément primaire, d'un quadripôle électrique modélisant l'ensemble formé par le premier et le second transducteur couplés acoustiquement, avec le second transducteur en circuit ouvert ;
le moyen de contrôle étant également configuré pour
e) calculer la différence entre la première et la seconde phase pour chaque fréquence de ladite pluralité de fréquences ;
et pour
f) déterminer ladite fréquence de fonctionnement en fonction de ladite différence entre la première et la seconde phase calculée pour ladite pluralité de fréquences.

9. Système selon la revendication 8 dans lequel ledit moyen de contrôle (MCP) est configuré pour déterminer une dite fréquence de fonctionnement comprise entre une première valeur ($f_1$) maximisant ladite différence entre la première et la seconde phase et une deuxième valeur ($f_2$) l'annulant, cette dernière valeur étant exclue.

10. Système selon la revendication 9 dans lequel ledit moyen de contrôle (MCP) est configuré pour déterminer une dite fréquence de fonctionnement comprise entre ladite première valeur ($f_1$) maximisant ladite différence entre la première et la seconde phase et une troisième valeur ($f_3$), comprise entre lesdites première ($f_1$) et deuxième ($f_2$) valeurs et telle que ladite différence entre la première et la seconde phase prend une valeur non inférieure à la moitié de sa valeur maximale.

11. Système selon l'une des revendications 8 à 10 comprenant, dans l'élément secondaire (ES), un second moyen de contrôle (MCS) ainsi qu'un dispositif de commutation (DC), ledit second moyen de contrôle étant configuré pour piloter l'actuation dudit dispositif de commutation pour le faire passer d'une condition dans laquelle le second transducteur (T2) est en court-circuit à une condition dans laquelle le second transducteur est en circuit ouvert et inversement (T2).

12. Système selon l'une des revendications 8 à 10 dans lequel l'élément secondaire comprend une paire de diodes (D1, D2) montées tête-bêche en parallèle audit second transducteur (T2), ledit premier moyen de contrôle (MCP) étant également configuré pour piloter le premier transducteur (T1) de manière à ce qu'il émette, à des instants successifs, desdites ondes acoustiques (OA) à un premier niveau d'intensité suffisamment faible pour qu'une tension (V2) générée par ledit second transducteur (T2) excité par lesdites ondes acoustique soit inférieure à une tension de seul desdites diodes (D1, D2), et à un second niveau d'intensité suffisamment élevé pour qu'une tension (V2) générée par ledit second transducteur (T12) excité par lesdites ondes acoustique soit supérieure à une tension de seul desdites diodes (D1, D2).

13. Système selon l'une des revendications 8 à 12 dans lequel ledit premier moyen de contrôle, ou lesdits premiers et seconds moyens de contrôle, sont configurés pour mettre en œuvre les étapes a) à e) successivement pour chaque fréquence de ladite pluralité de fréquences.

14. Système selon l'une des revendications 8 à 12 dans lequel ledit premier moyen de contrôle, ou lesdits premiers et seconds moyens de contrôle, sont configurés pour mettre en œuvre d'abord les étapes a) et b) pour ladite pluralité de fréquences, puis les étapes c) et d) pour les mêmes fréquences, ou inversement.

[Fig. 1]

Fig.1

[Fig. 2]

Fig. 2

[Fig. 3]

Fig. 3

[Fig. 4]

i=1

1<sup>er</sup> transducteur : émission ondes acoustiques, fréquence f<sup>(i)</sup> ∈BF
2<sup>nd</sup> transducteur : court-circuit   a)

Mesure $\varphi^{cc}\left(f^{(i)}\right) = arg\left[Z_{in}^{cc}\left(f^{(i)}\right)\right]$   b)

1<sup>er</sup> transducteur : émission ondes acoustiques, fréquence f<sup>(i)</sup> ∈BF
2<sup>nd</sup> transducteur : circuit ouvert   c)

Mesure $\varphi^{co}\left(f^{(i)}\right) = arg\left[Z_{in}^{co}\left(f^{(i)}\right)\right]$   d)

$\Delta\varphi\left(f^{(i)}\right) = \varphi^{cc}\left(f^{(i)}\right) - \varphi^{co}\left(f^{(i)}\right)$   e)

Si i<i$_{max}$ : i←i+1

Détermination $f_{fonc}$ en fonction de $\Delta\varphi(f)$   f)

Fig. 4

[Fig. 5]

```
                    ┌─────────────────────────┐
                    │           i=1           │
                    └─────────────────────────┘
                                 │
       ┌─────────────────────────▼─────────────────────────┐
       │  ┌─────────────────────────────────────────┐        a)
       │  │ 1ᵉʳ transducteur : émission ondes       │
       │  │ acoustiques, fréquence f⁽ⁱ⁾ ∈ BF        │
       │  │ 2ⁿᵈ transducteur : court-circuit        │
       │  └─────────────────────────────────────────┘
       │                     │
       │  ┌─────────────────────────────────────────┐        b)
       │  │ Mesure φᶜᶜ(f⁽ⁱ⁾) = arg[Zⁱⁿᶜᶜ(f⁽ⁱ⁾)]  │
       │  └─────────────────────────────────────────┘
       │                     │
       │  ┌─────────────────────────────────────────┐
       └──│ Si i<i_max : i←i+1                       │
          └─────────────────────────────────────────┘
                              │
          ┌─────────────────────────────────────────┐
          │                  i=1                     │
          └─────────────────────────────────────────┘
```

a) 1ᵉʳ transducteur : émission ondes acoustiques, fréquence $f^{(i)} \in BF$
2ⁿᵈ transducteur : court-circuit

b) Mesure $\varphi^{cc}(f^{(i)}) = arg\left[Z_{in}^{cc}(f^{(i)})\right]$

Si $i < i_{max}$ : $i \leftarrow i+1$

i=1

c) 1ᵉʳ transducteur : émission ondes acoustiques, fréquence $f^{(i)} \in BF$
2ⁿᵈ transducteur : circuit ouvert

d) Mesure $\varphi^{co}(f^{(i)}) = arg\left[Z_{in}^{co}(f^{(i)})\right]$

Si $i < i_{max}$ : $i \leftarrow i+1$

e) $\Delta\varphi(f) = \varphi^{cc}(f) - \varphi^{co}(f)$

f) Détermination $f_{fonc}$ en fonction de $\Delta\varphi(f)$

Fig. 5

[Fig. 6]

Fig. 6

[Fig. 7]

Fig. 7

[Fig. 8]

Fig. 8

**RAPPORT DE RECHERCHE EUROPEENNE**

Numéro de la demande

EP 25 22 5205

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 4 080 791 A1 (COMMISSARIAT ENERGIE ATOMIQUE [FR]) 26 octobre 2022 (2022-10-26) * alinéas [0001] - [0021] * * alinéas [0027] - [0046] * * alinéas [0050] - [0117] * * figures 1, 3-5, 7 * ----- | 1-14 | INV. H04B11/00 |
| A | US 10 559 981 B2 (UNIV DALHOUSIE [CA]; DAXSONICS ULTRASOUND INC [CA]) 11 février 2020 (2020-02-11) * colonne 1, ligne 12 - colonne 2, ligne 48 * * colonne 3, ligne 64 - colonne 6, ligne 37 * * colonne 7, ligne 56 - colonne 10, ligne 4 * * revendication 4 * * figures 1, 6 * ----- | 1-14 | |

**DOMAINES TECHNIQUES RECHERCHES (IPC)**

H04B

Le présent rapport a été établi pour toutes les revendications

| Lieu de la recherche | Date d'achèvement de la recherche | Examinateur |
|---|---|---|
| Munich | 15 avril 2026 | Rolan Cisneros, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**
EP 25 22 5205

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-2026

| Document brevet cité au rapport de recherche | | Date de publication | Membre(s) de la famille de brevet(s) | | Date de publication |
|---|---|---|---|---|---|
| EP 4080791 | A1 | 26-10-2022 | EP | 4080791 A1 | 26-10-2022 |
| | | | FR | 3121301 A1 | 30-09-2022 |
| | | | US | 2022311279 A1 | 29-09-2022 |
| US 10559981 | B2 | 11-02-2020 | EP | 3161926 A1 | 03-05-2017 |
| | | | US | 2017201131 A1 | 13-07-2017 |
| | | | WO | 2015196290 A1 | 30-12-2015 |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 4080791 A
- EP 3671872 A
- EP 2832016 A

- US 20100027379 A
- US 10559981 B

**Littérature non-brevet citée dans la description**

- **V. L. TAKAHASHI et al.** Ultrasonic Power and Data Transfer through Multiple Curved Layers Applied to Pipe Instrumentation. *Sensors*, 2019, vol. 19, 4074